# EUROPEAN PATENT SPECIFICATION

(11) **EP 3 393 922 B1**
(45) Date of publication and mention of the grant of the patent: **25.12.2019**
(21) Application number: 16816730.2
(22) Date of filing: 20.12.2016
(51) Int. Cl.: B65D 33/22

(54) **SEALABLE BAG AND METHOD OF SEALING THE SAME**
SIEGELFÄHIGER BEUTEL UND VERSIEGELUNGSVERFAHREN DAFÜR
SAC SCELLABLE ET SON PROCÉDÉ DE SCELLEMENT

(30) Priority: 22.12.2015 GB 201522659
(43) Date of publication of application: 31.10.2018
(73) Proprietor: Flexipol Packaging Limited, Rossendale, Lancashire BB4 5HH (GB)
(72) Inventor: STEVENS, Richard, Bury Lancashire BL8 2EX (GB)
(74) Representative: HGF Limited
(86) International application number: PCT/GB2016/053998
(87) International publication number: WO 2017/109473

(56) References cited:
- EP-A2- 0 346 944
- US-A1- 2006 045 392
- US-A1- 2006 073 292

## Description

The present invention relates to a bag with a plastics body and a sealable opening, and a method of sealing a sealable bag.

### BACKGROUND

Bags of many different types are known and are used in many industries for a variety different applications. Traditionally, in certain industries such as the food industry, paper bags are used to contain dry products. Such bags are often sealed following introduction of the product therein. A common paper bag sealing process includes clamping an opening and applying heat, whereby the paper bag will likely include a liner of plastics material (e.g. polyethylene) such that the plastics material will fuse together when heat is applied. Once fused together, the opening is then further sealed by stitching a separate portion of the opening above the fused plastic.

Increasingly, there is a desire to use plastic bags as opposed to the traditionally used paper bags. Certain advantages associated with the use of plastics bags include lower failure rates (e.g. bag splits) and increased levels of cleanliness. However, heat sealable plastic bags require specialist heat sealing equipment for handling and sealing the bags. As such, in many industries, a transition from paper to plastic bags would require the installation of new equipment which may be extremely costly and inconvenient.

EP 0346944 A2 describes molecularly oriented films for use in shrink packaging that comprise a blend of 10 to 90% by weight of linear low density polyethylene with ethylene vinyl acetate. The blend can form one layer of a triple layer film laminate, the other layers being a barrier layer for instance comprising an ethylene vinyl alcohol copolymer and a third layer which can be ethylene vinyl acetate or a blend similar or identical to that forming the layer.

This document also discloses a bag comprising: a body made of plastics material defining a volume for receiving a product; and a sealable portion for sealing an opening of the body, the sealable portion including a first layer and a second layer that is externally arranged around at least a portion of the first layer and has a higher melting point than the first layer; wherein the sealable portion is configured such that, in use, a heating device may fuse the first layer together to seal the sealable portion and close the opening, where the second layer may permit the transfer of heat from the heating device to the first layer to cause fusing but prevent the fusing of the first layer to the heating device.

Bags made from the multiple layer films are described as being especially useful for the shrink packaging of meats having large cavities and bony protrusions.

It is an object of certain embodiments of the present invention to overcome certain disadvantages associated with the prior art.

### BRIEF SUMMARY OF THE DISCLOSURE

According to a first aspect of the invention, there is provided a bag comprising:
a body made of plastics material defining a volume for receiving a product; and
a sealable portion for sealing an opening of the body, the sealable portion including a first layer and a second layer that is externally arranged around at least a portion of the first layer and has a higher melting point than the first layer;
wherein the sealable portion is configured such that, in use, a heating device may fuse the first layer together to seal the sealable portion and close the opening, where the second layer is configured to permit the transfer of heat from the heating device to the first layer to cause fusing but prevent the fusing of the first layer to the heating device; and
wherein the second layer is formed of a material that is different to the plastics material of the body.

Bags having this configuration may be sealable by heat sealing equipment that is arranged to seal conventional paper bags having a polyethylene liner. Additionally or alternatively, a cheaper material may be used for the body of the bag whilst still retaining the ability to be sealed.

In certain embodiments, a portion of the body may define the first layer. Either or both of the first layer and the second layer may be provided as a plurality of parts. For example, either or both of the first layer and the second layer may include a front panel and a rear panel.

In certain embodiments, the body may be formed of a plurality of pieces. The body may have a front panel and a rear panel, where the front panel is joined to the rear panel along respective edges of the front panel and rear panel. The body may further comprise a base panel that defines a base of the bag, the base panel being joined to the front panel and rear panel.

In certain embodiments, the first layer and second layer may be provided as a laminate.

In certain embodiments, the first layer may be fusable at temperatures less than 200°C, and the second layer has a melting point higher than 200°C.

In certain embodiments, the first layer may comprise a plastics material. The plastics material may be one of polyethene (PE) or ethylene vinyl acetate (EVA).

In certain embodiments, the second layer may comprise a plastics material or a metal. The second layer may comprise one of polyester, nylon or aluminium.

In certain embodiments, the first layer may have a thickness between 50 and 150 microns, between 80 and 120 microns, or be about 100 microns.

In certain embodiments, the second layer may have a thickness between 5 and 15 microns, between 10 and 15 microns, or be about 12 microns.

The bag may further comprise a valve that is configured to permit the passage of gas out of the bag, but substantially prevent the passage of gas into the bag. The valve may provide a passageway through one or both of the first layer and second layer. Alternatively, the valve may provide a passageway through the body of the bag.

According to a second aspect of the invention, there is provided an assembly comprising:
a bag according to the first aspect of the invention, as defined in claims 1 to 12; and
a heat sealing device for sealing the sealable portion of the bag.

According to a third aspect of the invention, there is provided a method of sealing a bag, comprising:
providing a bag according to the first aspect of the invention, as defined in claims 1 to 12; and
applying heat to the second layer such that the heat may transfer to the first layer and cause fusing of the first layer together to seal the sealable portion.

The method may further comprise stitching the sealable opening.

### BRIEF DESCRIPTION OF THE DRAWINGS

Embodiments of the invention are further described hereinafter with reference to the accompanying drawings, in which:
Figure 1 is a schematic perspective view of a bag according to an embodiment of the present invention;
Figure 2A is a schematic front view of a bag according to an alternative embodiment of the present invention;
Figure 2B is a sectional view along the line A-A' of Figure 2A;
Figure 3 is a schematic sectional view of a bag according to an alternative embodiment of the present invention;
Figure 4 is a schematic sectional view of a bag according to an alternative embodiment of the present invention;
Figure 5A is a schematic front view of a bag according to an alternative embodiment of the present invention;
Figure 5B is a schematic sectional view along the line B-B' of Figure 5A;
Figure 6A is a schematic front view of a bag according to an alternative embodiment of the present invention;
Figure 6B is a schematic sectional view along the line C-C' of Figure 6A; and
Figure 6C is a schematic enlarged view of a portion of the bag of Figures 6A and 6B in a sealing configuration.

### DETAILED DESCRIPTION

The skilled reader will appreciate that the Figures are not drawn to scale and the dimensions of certain features are exaggerated to facilitate understanding of embodiments of the present invention.

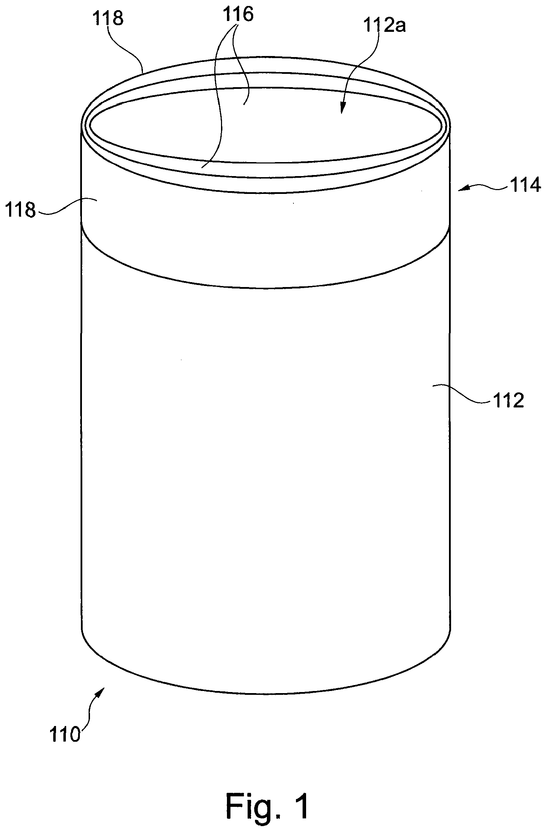

Figure 1 schematically shows a bag 110 according to an embodiment of the present invention. The bag 110 includes a body 112 made of plastics material and a sealable portion 114 for sealing an opening 112a of the body 112. The sealable portion 114 includes a first layer 116 and a second layer 118 arranged externally around the first layer 116. The bag 110 defines a volume suitable for receiving a product. In certain embodiments, the bag 110 may be configured for receiving a dry product such as flour. Once a product has been deposited in the bag 110, the bag 110 may be heat sealed to seal the product within the bag 110. In particular, a heating device or apparatus (not shown) may be used to fuse the first layer 116 together to seal the sealable portion 114 and close the opening 112a. The second layer 118 has a higher melting point than the first layer 116 such that upon application of heat from the heating device, the second layer 118 does not melt and provides a barrier between the first layer 116 and the heating device thereby preventing the fusing of the first layer 116 to the heating device. Despite providing a barrier between the first layer 116 and second layer 118, the second layer 118 is configured to permit the transfer of heat from the heating device to the first layer 116 to cause melting and subsequent fusing of the first layer 116.

The first layer 116 and/or second layer 118 may be provided in one or more parts that are attached to one another. For example, in certain embodiments, the first layer 116 and/or second layer 118 may be provided as two or more panels attached to one another to form the sealable portion 114. In such embodiments, each part of the first layer 116 may form an interior layer of the sealable portion 114 whilst the parts of the second layer 118 may be arranged externally around the parts of the first layer 116.

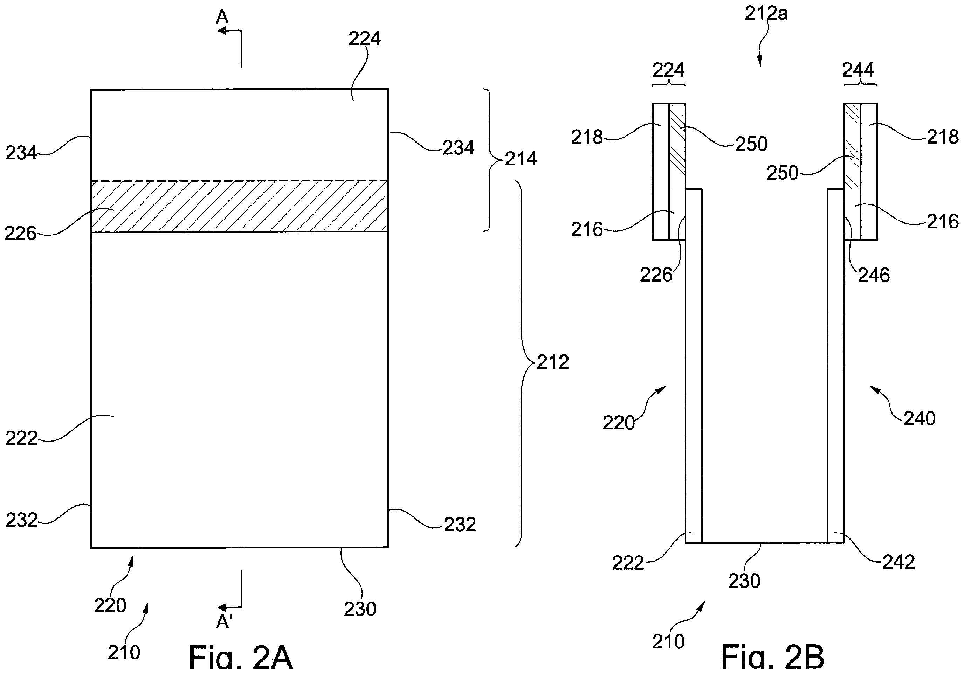

Figures 2A and 2B each schematically show a bag 210 according to another embodiment of the present invention, where Figure 2A is a front view and Figure 2B is a cross-sectional view along line A-A' of Figure 2A. The bag 210 shares features with the bag 110 of Figure 1, and such shared features are numbered using the same last two digits and a differing preceding digit. Differing or additional features of the bag 210 of Figures 2A and 2B are described below. In certain embodiments, any or all of the differing or additional features of the bag 210 of Figures 2A and 2B may be incorporated into the bag 110 of Figure 1.

Like the bag 110 of Figure 1, the bag 210 of Figures 2A and 2B includes a body 212 made of a plastics material and a sealable portion 214 for sealing an opening 212a of the body 212. As shown more clearly in Figure 2B, the body 212 has a front body panel 222, a rear body panel 242 and a base 230 which together define a volume suitable for receiving a product. The front body panel 222 is joined to the rear body panel 242 along edges 232. The sealable portion 214 includes a first layer 216 and a second layer 218 arranged externally around the first layer 216. As with the sealable portion 114 of Figure 1, the second layer 218 has a higher melting point than the first layer 216.

The sealable portion 214 is in two parts so as to define a front sealable panel 224 and a rear sealable panel 244. The front and rear sealable panels 224,244 are joined to one another along edges 234. The front sealable panel 224 is attached to the front body panel 222 in a front attachment region 226, and the rear sealable panel 244 is attached to the rear body panel 242 in a rear attachment region 246. The sealable panels 224,244 may be attached to the body panels 222,242 by any suitable method, including gluing or fusing. The front body panel 222 and front sealable panel 224 form a front side 220 of the bag 210, and, similarly, the rear body panel 222 and rear sealable panel 244 form a rear side 240 of the bag 210.

The first layer 216 includes a heat sealable region 250. In the embodiment shown in Figures 2A and 2B, the heat sealable region 250 is the remainder of the first layer that does not form part of the front 226 or rear 246 attachable regions. Like the bag 110 of Figure 1, the bag 210 may be heat sealed to seal the internal volume. In particular, a heating device may be used to fuse the heat sealable region 250 together to seal the sealable portion 214 and close the opening 212a.

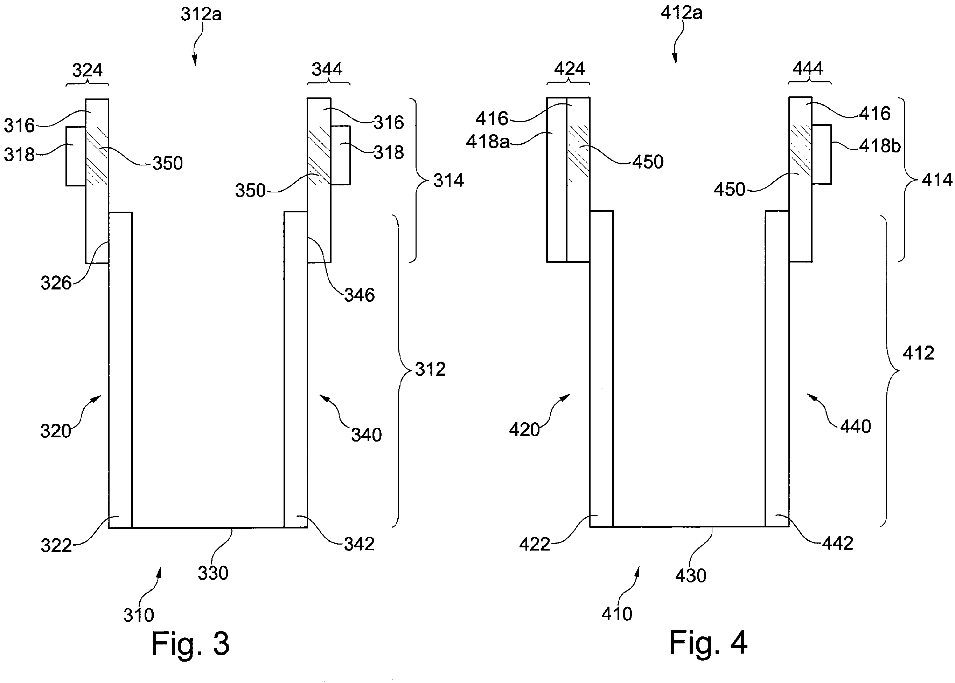

Figure 3 schematically shows a bag 310 according to another embodiment of the present invention. The bag 310 shares features with the above-described embodiments, and such shared features are numbered using the same last two digits and a differing preceding digit. Differing or additional features of the bag 310 of Figure 3 are described below. In certain embodiments, any or all of the differing or additional features of the bag 310 of Figure 3 may be incorporated into the above-described bags 110, 210.

Like the bag 210 of Figures 2A and 2B, the bag 310 of Figure 3 includes a sealable portion 314 defined by a front sealable panel 324 and a rear sealable panel 344. The sealable portion 314 includes a first layer 316 and a second layer 318 arranged externally around a strip-like portion of the first layer 316. As such, the second layer 318 extends along the width of each sealable panel 324,344, but, as shown clearly in Figure 3, only extends across a portion of the height of the sealable portion 314 which would be suitably heat sealable (that is, not encompassing a front attachment region 326 or a rear attachment region 346). By only being arranged around a portion of the first layer 316, less material is required to form the second layer 318 thereby providing a cost saving whilst still achieving the benefit of providing a barrier between the first layer 316 and a heating device (not shown) in use. As with the sealable portions of the above-described embodiments, the second layer 318 has a higher melting point than the first layer 316. The first layer 316 includes a heat sealable region 350 that may provide a suitable area for fusing to form a seal. In the embodiment shown in Figure 3, the heat sealable region 350 is defined as the region adjacent to the second layer 318. Consequently, the second layer 318 provides a barrier between the first layer 316 and the heating device in the heat sealable region 350, thereby preventing the fusing of the first layer 316 to the heating device in use. Like the bags of the above-described embodiments, the bag 310 may be heat sealed to seal an internal volume of the bag 310. In particular, a heating device may be used to fuse the heat sealable region 350 together to seal the sealable portion 314 and close an opening 312a.

Figure 4 schematically shows a bag 410 according to another embodiment of the present invention. The bag 410 shares features with the bags of the above-described embodiments, and such shared features are numbered using the same last two digits and a differing preceding digit. Differing or additional features of the bag 410 of Figure 4 are described below. In certain embodiments, any or all of the differing or additional features of the bag 410 of Figure 4 may be incorporated into the above-described bags 110, 210, 310.

The bag 410 includes a sealable portion 414 that includes a first layer 416. The first layer 416 defines a front sealable panel 424 and a rear sealable panel 444. In this embodiment, the sealable portion 414 includes a second layer 418 arranged external to the first layer 416, whereby the second layer 418 is in two parts. In particular, the front sealable panel 424 includes a front second layer 418a arranged externally around the first layer 416 (similar to bag 210 of Figures 2A and 2B), and the rear sealable panel 444 includes a rear second layer 418b arranged externally around a strip-like portion of the first layer 416 (similar to bag 310 of Figure 3). By only being arranged around a portion of the first layer 416, less material is required to form the rear second layer 418b and thus a cost reduction may be possible. As with the sealable portions of the above-described embodiments, both the front 418a and rear 418b second layers have a higher melting point than the first layer 416. The first layer 416 includes a heat sealable region 450 that may provide a suitable area for fusing to form a seal. In the embodiment shown in Figure 4, the heat sealable region 450 is defined as the region adjacent to the rear second layer 418b and the corresponding portion of the first layer 416 on the front sealable panel 424. Like the bags of the above-described embodiments, the bag 410 may be heat sealed to seal an internal volume of the bag 410. In particular, a heating device may be used to fuse the heat sealable region 450 together to seal the sealable portion 414 and close an opening 412a of the bag 410.

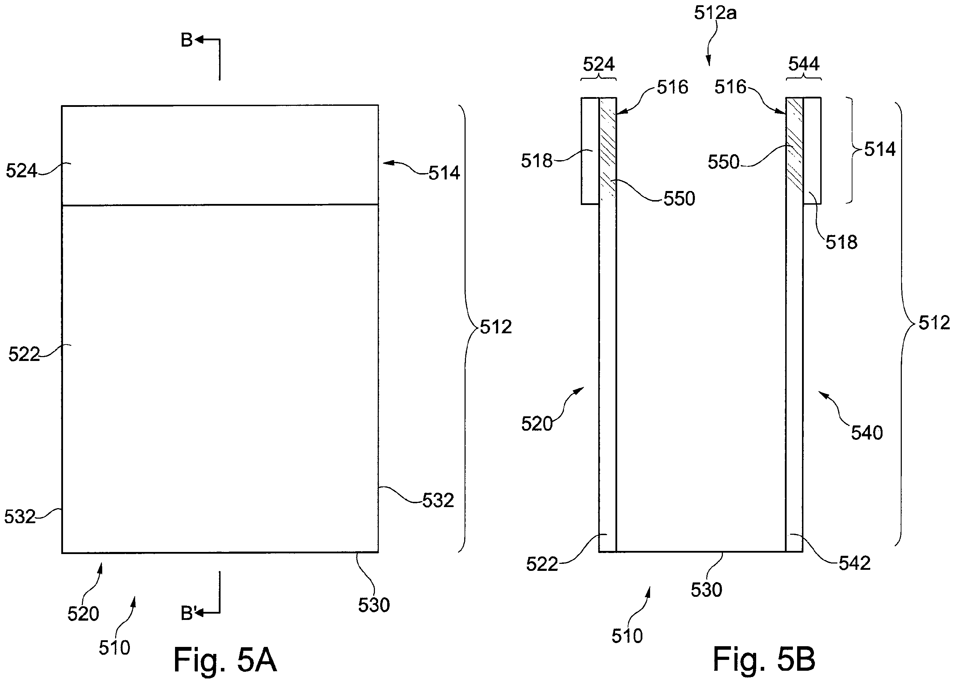

Figures 5A and 5B each schematically show a bag 510 according to another embodiment of the present invention, where Figure 5A is a front view and Figure 5B is a cross-sectional view along the line B-B' of Figure 5A. The bag 510 shares features with the above-described embodiments, and such shared features are numbered using the same last two digits and a differing preceding digit. Differing or additional features of the bag 510 of Figures 5A and 5B are described below. In certain embodiments, any or all of the differing or additional features of the bag 510 of Figures 5A and 5B may be incorporated into the above-described bags 110, 210, 310, 410.

The bag 510 includes a body 512 made of a plastics material and a sealable portion 514. In this embodiment, the sealable portion 514 is contiguous with body 512, such that the bag 510 includes a first layer 516 which forms part of both the body 512 and the sealable portion 514. That is, a portion of the body 512 defines the first layer 516. The sealable portion 514 is therefore defined by a second layer 518 arranged external to a portion of the first layer 516. The second layer 518 may be attached to the first layer 516 by any suitable method, including laminating or gluing. As with the sealable portions of the above-described embodiments, the second layer 518 has a higher melting point than the first layer 516. The first layer 516 includes a heat sealable region 550 that may provide a suitable area for fusing to form a seal. In the embodiment shown in Figures 5A and 5B, the heat sealable region 550 is defined as the region of the first layer 516 that is adjacent to the second layer 518. As with the above-described embodiments, the second layer 518 provides a barrier between the first layer 516 and a heating device (not shown) thereby preventing the fusing of the first layer 316 to the heating device. Like the bags of the above-described embodiments, the bag 510 may be heat sealed to seal an internal volume of the bag 510. In particular, the heating device may be used to fuse the heat sealable region 550 together to seal the sealable portion 514 and close an opening 512a of the bag 510.

In other embodiments according to the present invention, the bag may include any combination of features of the above-described front 220,320,420,520 and rear 240,340,440,540 sides.

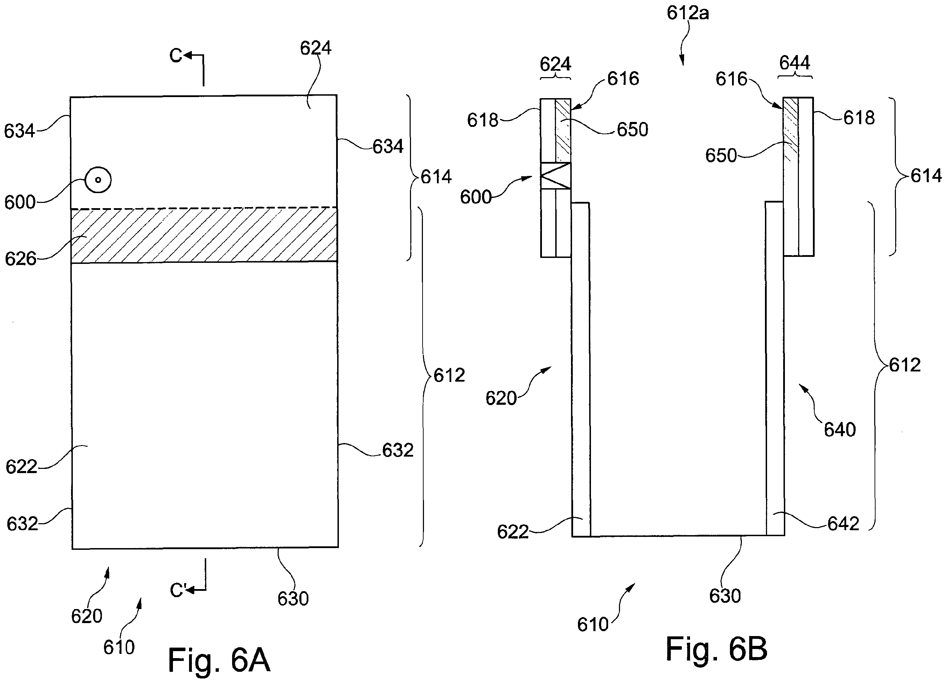

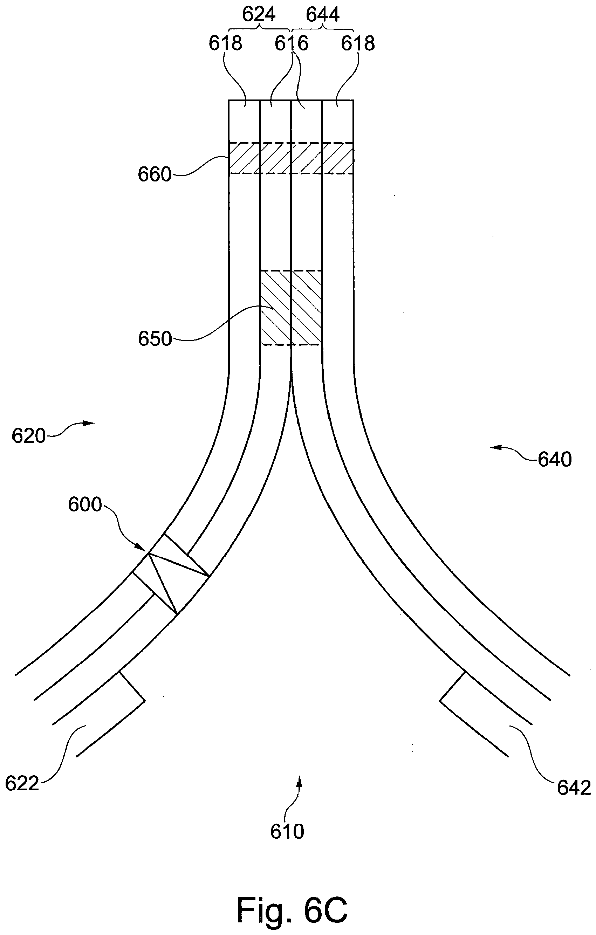

Figures 6A, 6B, and 6C each schematically show a bag 610 according to another embodiment of the present invention, where Figure 6A is a front view, Figure 6B is a cross-sectional view along the line C-C' of Figure 6A, and Figure 6C is a schematic enlarged view of Figure 6B in a configuration where the bag 610 is sealed. The bag 610 shares features with the above described embodiments, and such shared features are numbered using the same last two digits and a differing preceding digit. Differing or additional features of the bag 610 are described below. In certain embodiments, any or all of the differing or additional features of the bag 610 of Figures 6A, 6B and 6C may be incorporated into the above-described bags 110, 210, 310, 410, 510.

The bag 610 is largely identical to the bag 210 described above with reference to Figures 2A and 2B. Unlike the bag 210 of Figures 2A and 2B, the bag 610 of Figures 6A to 6C includes a one-way air valve 600 providing a selectively openable airway between the internal volume defined by the bag and the external atmosphere. In certain embodiments, the one-way air valve 600 may provide a passageway through the sealable portion 614 (as shown in Figures 6A and 6B) or through the body 612. The valve 600 may be attached to the bag 610 by any suitable method, including gluing or fusing. In certain embodiments, the valve 600 may be fused to the second layer 618 of the sealable portion 614. In a sealed configuration, air may be vented out of the bag 610 through the valve 600. The valve 600 may be configured such that air may not flow into the bag 610 therethrough, however. The valve 610 may be any suitable known valve arrangement.

Figure 6C schematically shows a portion of the bag 610 in a sealed configuration. A heat sealable region 650 of a first layer 616 has been fused together to close an opening 612a. The bag 610 may also be further sealed by stitching a stitching portion 660. In this closed configuration, the valve 600 is fused to the second layer 618 and is situated such that air can flow from the inside of the bag 610 to the atmosphere. The inclusion of the valve 600 may be advantageous in that it may permit the exhaustion of gases such as oxygen or carbon dioxide from the bag 610 when sealed (e.g. when storing products which are susceptible to bacteria growth or other respiring organisms).

In certain embodiments according to the present invention, a heating device may be used such that heat is only applied to one side of a bag. In such embodiments, only the side of the sealable portion that will contact the heating device may include a second layer to prevent a first layer from fusing to the heating device.

Whilst the bodies of the above-described bags have a particular shape and configuration, the present invention is not limited to any particular configuration of body. In particular, the body may be any suitable configuration that defines a volume for receiving a product. The body may be made of any number of panels or parts. In certain embodiments, the body may not include a dedicated base panel, but instead have a base otherwise defined (e.g. by a join between lower edges of side panels).

The plastics material of the bodies of bags according to embodiments of the present invention may be any suitable plastics material. In certain embodiments, the plastics material may be polyethene (PE) which offers a cost effective material that is suitable.

The first layer may be formed of any suitable plastics material that is capable of being fused together. Particularly suitable materials for the first layer include polyethene (PE) or ethylene vinyl acetate (EVA) as these materials are readily fused at the temperatures reached by many common heat sealing devices. The thickness of the first layer may be such that a suitable of amount of fusable material is available for fusing and providing a good seal. An overly thick first layer may fail to fuse in one or more regions and may lead to an incomplete or poor quality seal. In certain embodiments, the thickness of the first layer may be between 50 and 150 microns and, in particular embodiments, may be between 90 and 110 microns, or be of the order of 100 microns. In embodiments where the body of the bag is formed of a material that also serves as the first layer, the second layer may be bonded, affixed, coated or otherwise attached to the first layer.

The second layer may be formed of any suitable material which has a higher melting point than the first layer. As described above, the purpose of the second layer is to provide a barrier that prevents the first layer fusing to the heat sealing apparatus. To function as required, the second layer must still permit the transmission of heat therethrough such that the heat sealing apparatus may cause the first layer to fuse. By having a suitably higher melting point than the first layer, the second layer is not caused to melt or fuse during the heat sealing process. In certain embodiments, the second layer may be made of a plastics material or a metal. Due to the specific requirements of the second layer, it is likely that it would not be economically attractive to use the chosen material to form the body of the bag, for which more cost effective and suitable options are available. Indeed, in accordance with the present invention, the body of the bag is formed of a different material to the material of the second layer. Examples of suitable materials for the second layer include polyester, nylon or aluminium. The appropriate thickness of the second layer may depend on the material chosen. In certain embodiments, the thickness of the second layer may be between 5 and 15 microns, and, in particular, may be of the order of 12 microns.

In certain embodiments, the first and second layers may collectively be provided as a laminate. For example, the first and second layers may be formed by co-extrusion of two materials. In certain other embodiments, the first layer and second layer may be formed separately and bonded to one another by any suitable means.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is solely defined by the appended claims.

## Claims

1. A bag (210) comprising:
a body (212) made of plastics material defining a volume for receiving a product; and
a sealable portion (214) for sealing an opening of the body (212), the sealable portion (214) including a first layer (216) and a second layer (218) that is externally arranged around at least a portion of the first layer (216) and has a higher melting point than the first layer (216);
wherein the sealable portion (214) is configured such that, in use, a heating device may fuse the first layer (216) together to seal the sealable portion (214) and close the opening, where the second layer (218) is configured to permit the transfer of heat from the heating device to the first layer (216) to cause fusing but prevent the fusing of the first layer (216) to the heating device; and
wherein the second layer (218) is formed of a material that is different to the plastics material of the body (212).

2. A bag (210) according to claim 1, wherein a portion of the body (212) defines the first layer (216).

3. A bag (210) according to claim 1 or 2, wherein either or both of the first layer (216) and the second layer (218) are provided as a plurality of parts, optionally, wherein either or both of the first layer (216) and the second layer (218) include a front panel and a rear panel.

4. A bag (210) according to any preceding claim, wherein the body (212) is formed of a plurality of pieces.

5. A bag (210) according to claim 4, wherein the body (212) has a front panel (222) and a rear panel (242), where the front panel (222) is joined to the rear panel (242) along respective edges of the front panel (222) and rear panel (242), optionally, wherein the body (212) further comprises a base panel (230) that defines a base (230) of the bag (210), the base panel (230) being joined to the front panel (222) and rear panel (242).

6. A bag (210) according to any preceding claim, wherein the first layer (216) and second layer (218) are provided as a laminate.

7. A bag (210) according to any preceding claim, wherein the first layer (216) is fusable at temperatures less than 200°C, and the second layer (218) has a melting point higher than 200°C.

8. A bag (210) according to any preceding claim, wherein the first layer (216) comprises a plastics material, optionally, wherein the plastics material is one of polyethene (PE) or ethylene vinyl acetate (EVA).

9. A bag (210) according to any preceding claim, wherein the second layer (218) comprises a plastics material or a metal, optionally, wherein the second layer (218) comprises one of polyester, nylon or aluminium.

10. A bag (210) according to any preceding claim, wherein the first layer (216) has a thickness between 50 and 150 microns, optionally, wherein the first layer (216) has a thickness between 80 and 120 microns, and further optionally, wherein the first layer (216) has a thickness of about 100 microns.

11. A bag (210) according to any preceding claim, wherein the second layer (218) has a thickness between 5 and 15 microns, optionally, wherein the second layer (218) has a thickness between 10 and 15 microns, and further optionally, wherein the second layer (218) has a thickness of about 12 microns.

12. A bag (210) according to any preceding claim, further comprising a valve (600) that is configured to permit the passage of gas out of the bag (210), but substantially prevent the passage of gas into the bag (210), and optionally, wherein the valve (600) provides a passageway through one or both of the first layer (216) and second layer (218), or wherein the valve (600) provides a passageway through the body (212) of the bag (210).

13. An assembly comprising:
a bag (210) according to any preceding claim; and
a heat sealing device for sealing the sealable portion (214) of the bag (210).

14. A method of sealing a bag (210), comprising:
providing a bag (210) according to any of claims 1 to 12; and
applying heat to the second layer (218) such that the heat may transfer to the first layer (216) and cause fusing of the first layer (216) together to seal the sealable portion (214).

15. A method according to claim 14, further comprising stitching the sealable opening.

## Patentansprüche

1. Beutel (210), umfassend:
einen Körper (212) aus Kunststoff, der ein Volumen zur Aufnahme eines Produkts definiert; und
einen versiegelbaren Abschnitt (214) zum Versiegeln einer Öffnung des Körpers (212), wobei der versiegelbare Abschnitt (214) eine erste Schicht (216) und eine zweite Schicht (218) beinhaltet, die außen um mindestens einen Abschnitt der ersten Schicht (216) angeordnet ist und einen höheren Schmelzpunkt als die erste Schicht (216) aufweist;
wobei der versiegelbare Abschnitt (214) dazu konfiguriert ist, dass bei Gebrauch eine Heizvorrichtung die erste Schicht (216) zusammenschmilzt, um den versiegelbaren Abschnitt (214) zu versiegeln und die Öffnung zu schließen, wobei die zweite Schicht (218) dazu konfiguriert ist, die Wärmeübertragung von der Heizvorrichtung zu der ersten Schicht (216) zu ermöglichen, um das Zusammenschmelzen zu verursachen, ohne dass dabei die erste Schicht (216) mit der Heizvorrichtung zusammenschmilzt; und
wobei die zweite Schicht (218) aus einem Werkstoff hergestellt ist, der sich von dem Kunststoff des Körpers (212) unterscheidet.

2. Beutel (210) nach Anspruch 1, wobei ein Abschnitt des Körpers (212) die erste Schicht (216) definiert.

3. Beutel (210) nach einem der Ansprüche 1 oder 2, wobei eine oder beide von der ersten Schicht (216) und der zweiten Schicht (218) als eine Vielzahl von Teilen bereitgestellt werden, und wobei optional eine oder beide von der ersten Schicht (216) und der zweiten Schicht (218) eine Vorderseite und eine Rückseite beinhalten.

4. Beutel (210) nach einem der vorhergehenden Ansprüche, wobei der Körper (212) aus einer Vielzahl von Stücken hergestellt ist.

5. Beutel (210) nach Anspruch 4, wobei der Körper (212) eine Vorderseite (222) und eine Rückseite (242) aufweist, wobei die Vorderseite (222) mit der Rückseite (242) entlang entsprechender Ränder der Vorderseite (222) und der Rückseite (242) verbunden ist, wobei der Körper (212) gegebenenfalls ferner eine Bodenseite (230) umfasst, die einen Boden (230) des Beutels (210) definiert, wobei die Bodenseite (230) mit der Vorderseite (222) und der Rückseite (242) verbunden ist.

6. Beutel (210) nach einem der vorhergehenden Ansprüche, wobei die erste Schicht (216) und die zweite Schicht (218) als Laminat bereitgestellt sind.

7. Beutel (210) nach einem der vorhergehenden Ansprüche, wobei die erste Schicht (216) bei Temperaturen unter 200°C schmelzbar ist, und die zweite Schicht (218) einen Schmelzpunkt aufweist, der über 200°C liegt.

8. Beutel (210) nach einem der vorhergehenden Ansprüche, wobei die erste Schicht (216) einen Kunststoff umfasst und wobei der Kunststoff gegebenenfalls entweder Polyethen (PE) oder Ethylenvinylacetat (EVA) ist.

9. Beutel (210) nach einem der vorhergehenden Ansprüche, wobei die zweite Schicht (218) einen Kunststoff oder ein Metall umfasst, wobei die zweite Schicht (218) gegebenenfalls Polyester, Nylon oder Aluminium umfasst.

10. Beutel (210) nach einem der vorhergehenden Ansprüche, wobei die erste Schicht (216) eine Dicke zwischen 50 und 150 µm aufweist, und wobei die erste Schicht (216) gegebenenfalls eine Dicke zwischen 80 und 120 µm aufweist, und ferner optional die erste Schicht (216) eine Dicke von rund 100 µm aufweist.

11. Beutel (210) nach einem der vorhergehenden Ansprüche, wobei die zweite Schicht (218) eine Dicke zwischen 5 und 15 µm aufweist, und wobei die zweite Schicht (218) gegebenenfalls eine Dicke zwischen 10 und 15 µm aufweist, und ferner optional die zweite Schicht (218) eine Dicke von rund 12 µm aufweist.

12. Beutel (210) nach einem der vorhergehenden Ansprüche, ferner umfassend ein Ventil (600), das dazu konfiguriert ist, den Durchtritt von Gas aus dem Beutel (210) zu ermöglichen, aber wesentlich den Durchtritt von Gas in den Beutel (210) zu verhindern, und wobei das Ventil (600) gegebenenfalls einen Durchgang durch eine oder beide von der ersten Schicht (216) und der zweiten Schicht (218) bereitstellt, oder wobei das Ventil (600) einen Durchgang durch den Körper (212) des Beutels (210) bereitstellt.

13. Baugruppe, umfassend:
einen Beutel (210) nach einem der vorhergehenden Ansprüche; und
eine Hitzeversiegelungsvorrichtung zum Versiegeln des versiegelbaren Abschnitts (214) des Beutels (210).

14. Verfahren zum Versiegeln eines Beutels (210), umfassend:
Bereitstellen eines Beutels (210) nach einem der Ansprüche 1 bis 12; und
Anwenden von Wärme auf die zweite Schicht (218), so dass die Wärme auf die erste Schicht (216) übertragen werden kann und das Zusammenschmelzen der ersten Schicht (216) verursacht, um den versiegelbaren Abschnitt (214) zu versiegeln.

15. Verfahren nach Anspruch 14, ferner ein Zuheften der versiegelbaren Öffnung umfassend.

## Revendications

1. Sac (210) comprenant :
un corps (212) constitué de matière plastique définissant un volume destiné à recevoir un produit ; et
une partie pouvant être scellée (214) destinée à sceller une ouverture du corps (212), la partie pouvant être scellée (214) comprenant une première couche (216) et une seconde couche (218) qui est agencée extérieurement autour d'au moins une partie de la première couche (216) et possède un point de fusion supérieur à celui de la première couche (216) ;
ladite partie pouvant être scellée (214) étant configurée de sorte que, lors de l'utilisation, un dispositif de chauffage peut faire fondre la première couche (216) ensemble pour sceller la partie pouvant être scellée (214) et fermer l'ouverture, ladite seconde couche (218) étant configurée pour permettre le transfert de chaleur à partir du dispositif de chauffage jusqu'à la première couche (216) pour entraîner la fusion mais empêcher la fusion de la première couche (216) avec le dispositif de chauffage ; et
ladite seconde couche (218) étant formée d'une matière qui est différente de la matière plastique du corps (212).

2. Sac (210) selon la revendication 1, une partie du corps (212) définissant la première couche (216).

3. Sac (210) selon la revendication 1 ou 2, ladite première couche (216) et/ou ladite seconde couche (218) étant disposée(s) sous forme d'une pluralité de parties, éventuellement, ladite première couche (216) et/ou ladite seconde couche (218) comprenant un panneau avant et un panneau arrière.

4. Sac (210) selon l'une quelconque des revendications précédentes, ledit corps (212) étant formé d'une pluralité de pièces.

5. Sac (210) selon la revendication 4, ledit corps (212) possédant un panneau avant (222) et un panneau arrière (242), ledit panneau avant (222) étant joint au panneau arrière (242) le long des bords respectifs du panneau avant (222) et du panneau arrière (242), éventuellement, ledit corps (212) comprenant en outre un panneau de base (230) qui définit une base (230) du sac (210), ledit panneau de base (230) étant joint au panneau avant (222) et au panneau arrière (242).

6. Sac (210) selon l'une quelconque des revendications précédentes, ladite première couche (216) et ladite seconde couche (218) étant fournies sous la forme d'un stratifié.

7. Sac (210) selon l'une quelconque des revendications précédentes, ladite première couche (216) fusible à des températures inférieures à 200°C et ladite seconde couche (218) possédant un point de fusion supérieur à 200°C.

8. Sac (210) selon l'une quelconque des revendications précédentes, ladite première couche (216) comprenant une matière plastique, éventuellement, ladite matière plastique étant l'une du polyéthène (PE) ou de l'éthylène acétate de vinyle (EVA).

9. Sac (210) selon l'une quelconque des revendications précédentes, ladite seconde couche (218) comprenant une matière plastique ou un métal, éventuellement, ladite seconde couche (218) comprenant l'un du polyester, du nylon ou de l'aluminium.

10. Sac (210) selon l'une quelconque des revendications précédentes, ladite première couche (216) possédant une épaisseur comprise entre 50 et 150 microns, éventuellement, ladite première couche (216) possédant une épaisseur comprise entre 80 et 120 microns, et en outre éventuellement, ladite première couche (216) possédant une épaisseur d'environ 100 microns.

11. Sac (210) selon l'une quelconque des revendications précédentes, ladite seconde couche (218) possédant une épaisseur comprise entre 5 et 15 microns, éventuellement, ladite seconde couche (218) possédant une épaisseur comprise entre 10 et 15 microns et, en outre éventuellement, ladite seconde couche (218) possédant une épaisseur d'environ 12 microns.

12. Sac (210) selon l'une quelconque des revendications précédentes, comprenant en outre une soupape (600) qui est conçue pour permettre le passage de gaz hors du sac (210), mais empêche sensiblement le passage de gaz dans le sac (210), et éventuellement, ladite soupape (600) fournissant un passage à travers la première couche (216) et/ou la seconde couche (218), ou ladite soupape (600) fournissant un passage à travers le corps (212) du sac (210).

13. Ensemble comprenant :
un sac (210) selon l'une quelconque des revendications précédentes ; et
un dispositif de thermosoudage pour sceller la partie pouvant être scellée (214) du sac (210).

14. Procédé de scellement d'un sac (210), comprenant :
la fourniture d'un sac (210) selon l'une quelconque des revendications 1 à 12 ; et
l'application de la chaleur à la seconde couche (218) de sorte que la chaleur puisse être transférée à la première couche (216) et entraînée la fusion de la première couche (216) ensemble pour sceller la partie pouvant être scellée (214).

15. Procédé selon la revendication 14, comprenant en outre la couture de l'ouverture pouvant être scellée.
